# FASCICULE DE BREVET EUROPEEN

(11) **EP 2 324 560 B1**
(45) Date de publication et mention de la délivrance du brevet: **14.03.2012**
(21) Numéro de dépôt: 09782507.9
(22) Date de dépôt: 02.09.2009
(51) Int. Cl.: H02K 5/06, H02K 5/173, H02K 5/22, H02K 11/00

(54) **FLASQUE CONNECTEUR POUR MACHINE ÉLECTRIQUE À ENROULEMENTS STATORIQUES**
VERBINDERFLANSCH FÜR EINE ELEKTRISCHE MASCHINE MIT STATORWICKLUNGEN
CONNECTOR FLANGE FOR AN ELECTRIC MACHINE WITH STATOR WINDINGS

(30) Priorité: 03.09.2008 FR 0855897
(43) Date de publication de la demande: 25.05.2011
(73) Titulaire: Société de Technologie MICHELIN, 63000 Clermont-Ferrand (FR); MICHELIN Recherche et Technique S.A., 1763 Granges-Paccot (CH)
(72) Inventeur: VEDY, Bertrand, CH-1814 La Tour De Peilz (CH)
(74) Mandataire: Bauvir, Jacques
(86) Numéro de dépôt international: PCT/EP2009/061336
(87) Numéro de publication internationale: WO 2010/026157

(56) Documents cités:
- EP-A1- 1 793 475
- WO-A-03/001216
- WO-A-2005/107042
- JP-A- 60 096 147
- US-A1- 2007 205 679

## Description

### DOMAINE DE L'INVENTION

La présente invention est relative aux machines électriques. Elle vise notamment des machines capables de mettre en oeuvre des puissances importantes sous un format très compact, notamment lorsqu'elles fonctionnent en moteur, par exemple pour des applications de traction à bord des véhicules automobiles.

### ETAT DE LA TECHNIQUE

On sait que les propositions de véhicules électriques se sont multipliées ces dernières années. On a vu apparaître des moteurs électriques dont la puissance peut atteindre par exemple 20, voire 30 kW dans un encombrement compatible avec l'intérieur d'une roue de véhicule ou son environnement immédiat dans le cas d'un véhicule comprenant une machine électrique. Compte tenu de la puissance électrique importante mise en oeuvre par ces machines dans un espace restreint, un système de refroidissement par circulation de fluide est généralement prévu dans la carcasse de la machine. Néanmoins l'organisation des organes fonctionnels tels que le stator, le rotor et d'autres éléments nécessaires au pilotage de la machine à l'intérieur de la carcasse reste une préoccupation essentielle pour les concepteurs de ce type de machines.

Selon un mode de construction connu dans l'état de la technique, par exemple par le document de brevet US 4 908 347, le stator est logé dans un fourreau (ou sleeve) de telle façon que les parties terminales de ce dernier s'étendent axialement vers l'extérieur au delà des extrémités du circuit magnétique statorique constituant la partie active du stator. Des enroulements sont logés dans les encoches. Au sortir des encoches à chaque extrémité axiale du circuit magnétique, les conducteurs de ces enroulements sont repliés en formant des boucles pour passer d'une encoche à la suivante, constituant ainsi des chignons qui sont abrités dans les parties terminales respectives du fourreau. D'un côté du stator débouchent aussi les extrémités des conducteurs d'enroulement destinées à être raccordées électriquement avec un connecteur ou un boîtier de raccordement approprié. A cet effet, ces extrémités passent par une ouverture ménagée latéralement dans la paroi du fourreau dans un embout qui fait saillie hors du fourreau dans une direction sensiblement radiale vers l'extérieur. Chaque partie terminale du fourreau est fermée par un couvercle qui complète la carcasse de la machine. Au centre de chaque couvercle est fixé un manchon qui supporte un palier dans lequel est engagée une extrémité respective de l'arbre du rotor de cette machine.

En fabrication, le stator est monté dans le fourreau et les tôles et les enroulements font l'objet d'une imprégnation de résine qui renforce à la fois la cohésion de l'ensemble et l'isolation des pièces conductrices. La résine d'imprégnation est admise à partir de chaque extrémité du fourreau et la présence, dans le fourreau, de l'ouverture de sortie des extrémités des enroulements conducteurs vers l'embout de raccordement rend cette opération assez délicate si l'on souhaite contrôler avec une bonne précision la mise en place de la résine.

Le document EP 1 174 988 déposé par une société apparentée aux demandeurs décrit également une construction de machine électrique synchrone du même type avec un stator logé dans un fourreau aux parties terminales axiales débordantes. D'un côté du stator les conducteurs de raccordement des enroulements sortent de la partie terminale du fourreau par une ouverture latérale vers un boîtier en vue de leur connexion externe. Cette même partie terminale est fermée par un couvercle centré sur l'axe du rotor qui supporte un élément de flasque déporté axialement vers l'intérieur pour recevoir un palier support d'une extrémité correspondante de l'arbre du rotor. Sur son prolongement vers l'extérieur au-delà dudit palier, cet arbre porte le rotor d'un résolveur ou resolver permettant de repérer à chaque instant la position angulaire du rotor de la machine par rapport au stator, afin d'assurer son pilotage optimal. Ce rotor de résolveur et son stator associé sont logés dans un espace ménagé entre l'élément de flasque de support du palier rotor susmentionné et la face axialement interne du couvercle de fermeture axiale de la carcasse.

La structure ainsi réalisée est relativement compacte. En revanche elle présente également l'inconvénient signalé à propos du document US 4 908 347 pour l'opération d'imprégnation de résine. En outre, comme cette dernière elle n'est pas modulaire. Pour chaque application de cette machine impliquant un agencement particulier des raccords électriques et imposant par conséquent des aménagements de leur sortie hors du fourreau, des modifications sont nécessaires à la construction d'ensemble de la carcasse et de son contenu.

Le document de brevet US 5 554 900 présente une réalisation dans laquelle la partie centrale du fourreau dans lequel est logé le stator se termine axialement (du côté de la sortie de raccordement des enroulements) au-delà de la face axiale correspondante du stator avant la sortie latérale des conducteurs de connexion externe des bobines. Elle est fermée par un flasque d'extrémité dont la partie centrale supporte d'un côté tourné vers le stator un palier de roulement de l'arbre du rotor. Cet arbre traverse le flasque et supporte de l'autre côté du flasque un résolveur. Le flasque est solidaire d'un enveloppe tubulaire qui prolonge le fourreau en définissant un logement cylindrique autour du corps du résolveur, fermé axialement par un couvercle perpendiculaire à l'axe. Les conducteurs de raccordement des enroulements en provenance du stator passent à travers le flasque dans ledit logement. La paroi latérale de l'enveloppe est percée d'une ouverture traversée par ces conducteurs qui débouchent en dehors de la carcasse de la machine dans un boîtier de connexion fixé à l'extérieur de cette paroi.

Cette construction peut permettre de pallier l'inconvénient d'un défaut de modularité signalé plus haut, puisque l'enveloppe et sa sortie de raccord pour les conducteurs pourrait être adaptée à volonté en fonction de contraintes de géométrie imposées par des applications différentes d'une telle machine électrique, sans que le corps de l'ensemble et le fourreau aient besoin d'être modifiés, à performances égales par ailleurs. Cependant la construction qui vient d'être évoquée pêche par un défaut de compacité, la souplesse d'adaptation étant acquise au prix d'un allongement axial de l'ensemble du fait de la juxtaposition axiale de deux espaces libres de part et d'autre du flasque porte palier à un bout de la carcasse. En outre au montage, le raccordement des bobines avec l'extérieur reste relativement complexe.

Une autre réalisation est décrite dans la demande de brevet US 2007/205679 selon laquelle l'enveloppe externe du stator d'une machine électrique autopilotée est prolongée par une pièce tubulaire fixée par des attaches à une des extrémités de l'enveloppe. Dans la paroi latérale de la pièce sont encastrés des conducteurs de liaison avec l'extérieur de la machine. A l'intérieur de la pièce ces conducteurs peuvent venir se connecter par enfichage avec des broches de sortie électrique des bobines du stator. Une cloison munie d'une ouverture centrale ferme en partie la pièce tubulaire dans sa partie médiane. Une portée est formée dans l'ouverture de cette cloison dans laquelle est montée du côté éloigné du stator un des paliers de roulement de l'arbre porte rotor de la machine. Entre ce palier et le stator de la machine, la cloison porte le stator d'un resolver dont le rotor est fixé sur l'arbre rotor qui vient d'être mentionné. Cette disposition nécessite un grand écartement entre les paliers de support de l'arbre porte rotor ce qui n'est pas favorable à une bonne résistance aux vibrations.

Le document de brevet Japonais JP 60 096147 illustre également une réalisation de machine dans la quelle un fourreau enveloppant un stator est fermé à une extrémité par une sorte de capot dont la paroi axiale présente un renflement axial interne dans lequel est maintenu un palier support d'une des portées de roulement de l'arbre du rotor de la machine. Le dispositif est organisé pour permettre aux conducteurs issus des bobines du stator de sortir de ce capot dans une direction parallèle et non perpendiculaire à l'axe, à travers ladite paroi de fermeture axiale du capot. Ce dispositif est donc destiné à une organisation de l'espace autour de la machine d'un type tout à fait différent de celui qui fait l'objet du présent mémoire.

### EXPOSE DE L'INVENTION

Au regard des nombreuses réalisations passées en revue ci-dessus, la présente invention vise une construction de machine électrique à enroulements statoriques qui permette de résoudre les difficultés notamment spatiales actuellement rencontrées dans la conception de machines électrique compactes et puissantes à la fois, pour des application industrielles multiples.

A cet effet, l'invention a pour objet une machine électrique comportant un stator, un rotor rotatif autour d'un axe à l'intérieur du stator et une carcasse enfermant l'ensemble, et dans laquelle : le stator comprend un circuit magnétique avec deux faces terminales, traversé, d'une part, par un canal cylindrique recevant le rotor et, d'autre part, par des encoches dans lesquelles sont logés des conducteurs d'enroulements dont les extrémités sont repliées dans des chignons au sortir de chacune desdites faces terminales, de façon à former des bobines raccordées électriquement à l'extérieur de la machine par des conducteurs de connexion à la sortie de l'une au moins de ces faces terminales; et la carcasse inclut un fourreau enveloppant latéralement circuit magnétique entre ses faces terminales, et une pièce tubulaire qui présente une paroi latérale fixée à une extrémité audit fourreau, du côté desdites sorties de conducteurs de connexion, pour le prolonger au-delà de la face terminale correspondante du stator, cette paroi latérale étant percée d'une ouverture pour la sortie desdits conducteurs de connexion aux fins de raccordement hors de la carcasse.

La machine est caractérisée en ce qu'un élément de flasque est rattaché à ladite pièce tubulaire du côté de son extrémité axiale opposée au fourreau, en ce que cet élément de flasque s'étend axialement depuis ce rattachement à l'intérieur de la pièce tubulaire en direction de la face terminale du circuit magnétique jusqu'en une position axiale proche de l'extrémité axiale du chignon correspondant, où il supporte un palier de rotation de l'arbre du rotor, et en ce qu'entre sa face radiale externe et la face radiale interne de la pièce tubulaire, l'élément de flasque délimite un espace annulaire propre à loger un excès de longueur des conducteurs de connexion entre le stator et l'extérieur de la machine. Ainsi, la pièce tubulaire avec son ouverture de sortie des conducteurs d'enroulements vers un connecteur, externe ou attaché à cette pièce, et l'élément de flasque qui porte le palier d'arbre forment un ensemble de flasque connecteur qui permet d'aménager, comme on le verra, de manière compacte et modulaire l'espace intérieur à l'extrémité de la carcasse de la machine.

On notera que grâce à cette disposition, il est possible au montage, avant l'assemblage de la pièce tubulaire avec le fourreau, de rassembler les conducteurs de connexion des enroulements hors du corps du stator et de les engager dans la pièce tubulaire en direction de l'ouverture de raccordement à l'extérieur. Il est ensuite loisible d'enrouler dans l'espace annulaire autour de l'élément de flasque dans la pièce tubulaire, à l'abri des pièces tournantes de la machine, la longueur du faisceau de fils de raccordement en excès, qui se forme lors de la fixation de la pièce tubulaire au fourreau de la carcasse.

De préférence, l'extrémité axiale interne dudit flasque pénètre à l'entrée de l'espace interne au chignon en laissant un passage de communication annulaire entre l'espace radial interne au chignon et ledit espace annulaire autour de l'élément de flasque. Cette disposition permet de rapprocher au maximum les deux paliers de l'arbre rotor l'un de l'autre. Ceci est avantageux pour la compacité de l'ensemble, la stabilité de la rotation de la machine électrique et la minimisation des vibrations. A partir de cette disposition, on peut faire en sorte que l'espace annulaire créé à l'avant des chignons s'évase radialement depuis l'extrémité axiale de la pièce tubulaire et vers l'extrémité radiale externe de l'élément de flasque qui porte le palier de l'arbre du rotor où elle offre le maximum d'espace pour loger les conducteurs de sortie des bobines du stator.

Selon une disposition de l'invention, la paroi radiale interne de l'élément de flasque délimite un espace qui s'élargit radialement en direction axiale depuis la portée du palier d'arbre rotor jusqu'à l'extrémité axiale externe de ladite pièce tubulaire. Conformément à une utilisation, on a aménagé dans cet espace un logement propre à recevoir le stator d'un resolver, entre la portée de palier de l'arbre du rotor machine et une ouverture à l'extrémité axiale externe de ladite pièce tubulaire, propre à fournir un accès à ce stator depuis l'extrémité axiale externe de cette pièce tubulaire. La paroi radiale interne de l'élément de flasque peut alors être pourvue d'une ouverture de communication avec l'espace annulaire, pour le passage de conducteurs statoriques du resolver, qui portent une information de position angulaire utile à la conduite de la machine, depuis ledit logement vers l'extérieur de celle-ci.

L'invention prévoit une forme d'exécution intéressante dans laquelle la pièce tubulaire constitue une pièce monobloc avec ledit élément de flasque interne, qui assure à la fois le support du palier de l'arbre rotor et l'aménagement de l'espace interne de cette pièce. On peut alors disposer que la paroi radiale interne de l'élément de flasque délimite un espace qui s'élargit radialement extérieurement depuis le palier jusqu'à une ligne de raccordement intégral dudit élément de flasque à l'extrémité axiale externe de la pièce tubulaire. Une réalisation monobloc est particulièrement bien venue pour respecter un objectif de modularité selon lequel on utilise un même corps de machine pour une catégorie générale d'application donnée. Une série de capots, éventuellement monoblocs, peuvent être développés, chacun spécifiquement adapté à un environnement particulier d'application de la machine, par exemple à chacun des modèles d'une plateforme automobile.

Selon un aspect de l'invention, la machine électrique comporte un resolver à l'intérieur dudit élément de flasque, dont le rotor est fixé sur l'arbre du rotor de la machine, du côté axial externe par rapport à la portée de palier du rotor, et le stator est monté dans un logement dudit élément de flasque comportant une ouverture d'accès depuis l'extrémité axiale externe de ladite pièce tubulaire. Dans une variante de réalisation, l'élément de flasque présente autour de la dite portée du palier de l'arbre rotor une butée en forme de couronne circulaire tournée du côté axial interne propre à caler axialement le palier. Un alésage est prévu au centre de cette couronne, dont le diamètre est supérieur à celui du rotor de résolver en sorte que, quand on démonte le rotor de la machine par un déplacement axial dans le stator moteur par rapport audit palier, il peut emmener avec lui le rotor du résolveur à travers ledit alésage sans en dérégler le calage angulaire par rapport au rotor de la machine.

Dans une réalisation où la pièce tubulaire qui prolonge le fourreau autour des conducteurs de connexion, a la forme générale d'un capot avec une face terminale du côté axial externe, une ouverture centrale débouche dans l'espace radial interne dudit élément de flasque. Cette face terminale peut être définie par une paroi en forme de couronne annulaire dont le bord circulaire externe est rattaché à la paroi latérale du capot et le bord circulaire interne est solidaire de l'extrémité axiale externe dudit élément de flasque

Quelle que soit la forme d'exécution particulière de la pièce tubulaire ou capot on prévoit normalement de fermer ledit logement par un couvercle à l'extrémité axiale de ladite pièce tubulaire. Cette fermeture peut notamment servir à bloquer axialement le stator de resolver dans sa position opérationnelle après fermeture du capot.

Enfin selon un aspect, pour permettre le raccordement des connexions de bobines de la machine à des systèmes électriques extérieur à la machine, la paroi latérale de la pièce tubulaire ou du capot est surmontée d'au moins un embout faisant saillie vers l'extérieur, percé d'un canal qui prolonge une ouverture de passage traversant ladite paroi pour le passage des conducteurs issus dudit espace annulaire dans la pièce tubulaire vers un connecteur. La paroi latérale de la pièce tubulaire peut comporter une deuxième ouverture surmontée d'un autre embout faisant saillie vers l'extérieur et percé d'un canal pour la sortie de conducteurs de raccordement du stator de résolveur hors de la carcasse.

On obtient ainsi un ensemble très compact, ce qui est crucial dans certaines applications modernes de ces machines, notamment comme moteurs pour la traction individuelle des roues d'un véhicule. Les dispositions selon l'invention permettent en outre, tout en respectant l'objectif de compacité, de concevoir des réalisations modulaires c'est-à-dire dans lesquelles un même corps de stator avec son fourreau et son agencement rotorique peuvent être réutilisés pour différentes applications (différents modèles de véhicules par exemple) qui requièrent des agencements différents en ce qui concerne la disposition des connecteurs ou la forme extérieure du capot, par exemple. Enfin l'opération d'imprégnation de l'ensemble statorique par une résine qui assure le collage des pièces en un ensemble compact et qui contribue à l'isolation des parties électriques s'en trouve largement facilitée. En effet, la résine qui peut typiquement être admise dans le fourreau du côté du stator où débouchent les conducteurs de liaison des bobines avec l'extérieur de la machine peut s'étaler autour des chignons et pénétrer dans les interstices entre les tôles elles-mêmes et les tôles et le fourreau, sans qu'il soit nécessaire de prendre de précautions particulières vis-à-vis de l'ouverture de sortie des conducteurs qui dans cette construction selon l'invention se trouve localisée dans le capot de fermeture du fourreau.

D'autres caractéristiques et avantages de l'invention ressortent de la description faite ci-après en référence aux dessins annexés qui montrent, à titre d'exemple non limitatifs, une réalisation de l'objet de l'invention.

### BREVE DESCRIPTIONDES FIGURES

La figure 1 représente une vue en coupe pare un plan axial de la machine électrique selon un mode de réalisation de l'invention.

La figure 2 est une vue de dessus de la machine illustrée figure1.

La figure 3 est une vue du stator et du rotor de la machine selon une coupe par le plan III-III de la figure 2.

La figure 4 est une vue en perspective d'un flasque d'extrémité de la machine illustrant plus précisément la mise en oeuvre de l'invention.

### DESCRIPTION D'UN EXEMPLE DE REALISATION

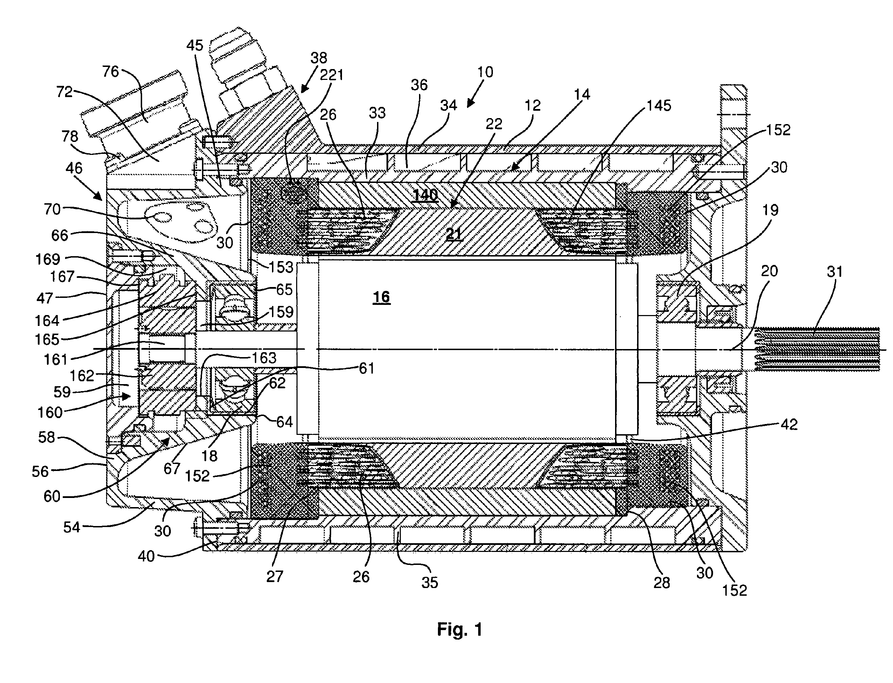

Une machine électrique synchrone 10 représentée à la figure 1 comprend une carcasse externe 12 à l'intérieur de laquelle sont logés un stator 14 et un rotor 16 tournant par rapport au stator autour d'un axe 20 à l'intérieur du stator. Le rotor est monté sur un arbre 31 engagé dans des paliers de roulement 18 et 19 solidaires de la carcasse 12. Le stator 14 comprend un circuit magnétique 22 formé d'un empilement 21 généralement cylindrique de tôles magnétiques 24. Les tôles 24 de l'empilement ont la forme d'étoiles avec des dents 142 séparées par des entailles trapézoïdales de manière à réaliser dans l'empilement 21 une série d'encoches 26 qui, sans être parallèles à l'axe 20, courent dans l'empilement 21, entre une de ses faces d'extrémité axiale 27 et son autre face d'extrémité axiale 28, en restant circonscrites à l'intérieur d'une couronne cylindrique virtuelle.

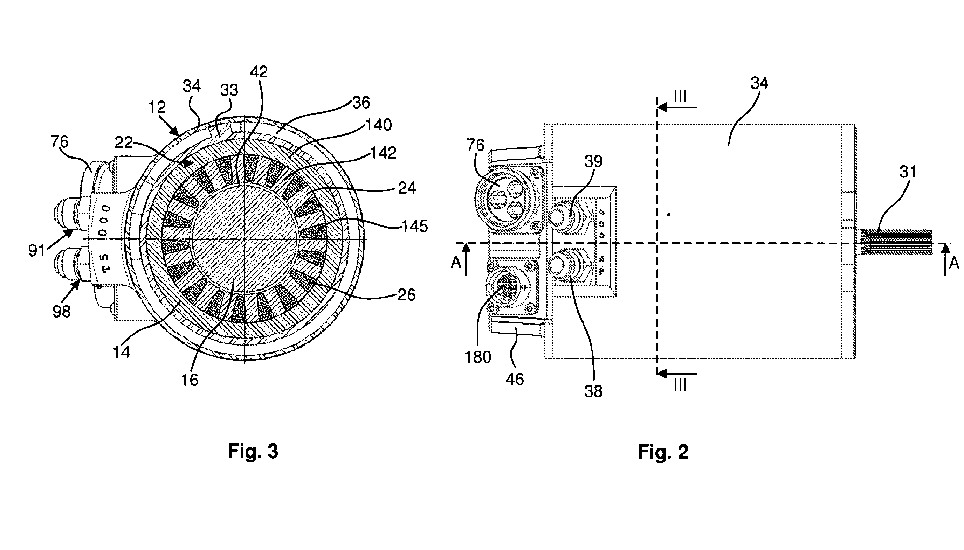

Dans la vue en coupe de la figure 3, on aperçoit clairement les encoches 26 remplies par des conducteurs 145, qui s'évasent entre une extrémité radiale interne au voisinage de l'entrefer 42 et leur autre extrémité radialement externe où elles sont fermées par une culasse 140 constituée par un empilement cylindrique de tôles en forme de couronnes circulaires. La culasse 140 ferme le circuit magnétique 22 à l'extrémité de chacune des dents 142 des tôles en étoile 24. Dans les encoches 26 sont logés, de façon bien connue, les conducteurs en cuivre 145, repliés au sortir de chaque encoche en formant une boucle afin de pénétrer dans une autre encoche 26 de façon à réaliser trois enroulements ou bobines propres à être connectés électriquement en étoile à une source d'alimentation en énergie ou un dispositif utilisateur de courant électrique alternatif triphasé selon un montage également bien connu pour ce type de machine. Les ensembles de boucles des conducteurs d'enroulement 145 sortant des faces terminales 27 et 28 forment des "chignons" 152 imprégnés de résine dans des blocs terminaux 30 (figure 1).

Le circuit magnétique 22 est percé axialement d'un canal cylindrique destiné à recevoir avec un entrefer calibré 42 (figure 3) le rotor 16 composé d'un assemblage d'aimants permanents, non représentés, et monté sur un arbre 31 dont les extrémités sont engagées chacune dans un des deux paliers 18 et 19 axialement espacés de part et d'autre du stator.

Le stator 12 est logé dans une portion de carcasse formant un fourreau en deux parties co-axiales. Dans l'espace cylindrique interne délimité par la paroi relativement épaisse d'un manchon 33 constituant la partie interne du fourreau est montée et bloquée en rotation la culasse 140 du circuit magnétique 22. La face radiale externe de la paroi du manchon 33 est garnie de nervures en hélice 35 qui ensemble délimitent trois parois d'un canal 36 de circulation de fluide de refroidissement du corps de stator. La quatrième face du canal 36 est fermée par un manchon externe, ou chemise 34, emboîté autour du manchon 33 (figure 3). Du côté d'une de ses extrémités, la chemise 34 présente une ouverture surmontée d'un embout creux 38 dont le canal interne est relié à travers la dite ouverture à une arrivée de fluide dans le canal de refroidissement 36 ménagé entre les deux manchons 33 et 34 pour former un serpentin en double hélice à la surface cylindrique externe de celui-ci. Le manchon 34 est pourvu d'un deuxième embout 39 (figure 2) relié de façon analogue à une autre extrémité du canal 36 pour l'évacuation du fluide de refroidissement.

Les enroulements du circuit magnétique 22 comportent des conducteurs de connexion à l'extérieur, non visibles sur la figure, qui sortent des encoches 26 à une extrémité du circuit magnétique 22, située à gauche sur la figure 1 dans cet exemple, pour être raccordés à l'extérieur de la machine comme il est expliqué plus loin. De ce même côté le fourreau formé par l'assemblage des manchons 33 et 34 se termine axialement par une face annulaire 40 perpendiculaire à l'axe 20 dans une position axiale au voisinage de celle des extrémités des blocs de résine 30. Tous les constituants de base du stator et eux seuls sont réunis à l'intérieur du fourreau pour former un ensemble compact dont l'imprégnation par la résine d'isolation et d'assemblage peut être réalisée directement à partir de cette extrémité du fourreau sans rencontrer d'occasion de fuite, ni d'obstacle ou d'inégalité tout autour de la zone de sortie des chignons, susceptibles de contrecarrer l'écoulement et la pénétration régulière la résine ou de favoriser l'apparition d'inégalités lors de son retrait à la polymérisation.

Sur la figure 1, la face d'extrémité annulaire 40 de ce fourreau apparaît comme formée par la face d'extrémité relativement épaisse du manchon interne 33 surmontée radialement vers l'extérieur par l'extrémité axiale du manchon externe 34. Elle se trouve légèrement décalée axialement vers l'extérieur par rapport au bout extrême du bloc de résine 30 dans lequel sont noyés les chignons 152. Ce décalage permet à la lèvre cylindrique terminale 45 d'un capot creux 46, destiné à compléter la carcasse de la machine de ce côté, de venir s'emboîter à l'intérieur de la paroi terminale du manchon 33.

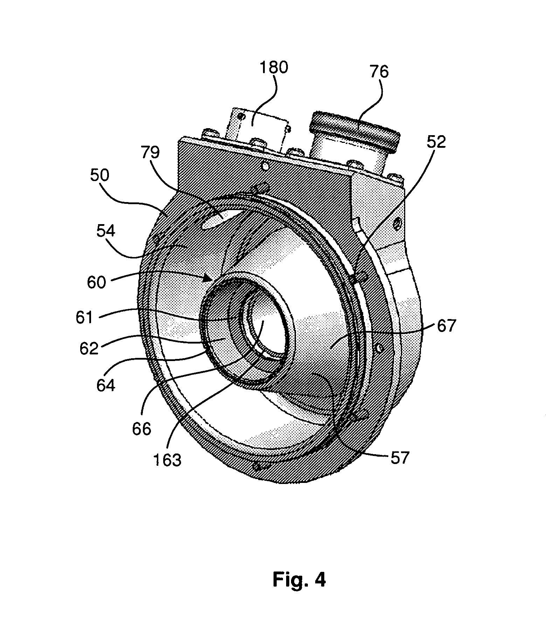

La lèvre 45 du capot 46 est surmontée par une collerette 50 , bien visible sur les figures 1 et 4, qui marque la limite de la course d'emboîtement de la lèvre 45 dans le manchon 33. Elle est munie de perçages pour des vis 52 de fixation axiale du capot dans la face terminale 40 du fourreau. Du côté opposé à la lèvre le capot 46 présente une paroi cylindrique 54 qui raccorde la collerette 50 à une extrémité axiale du capot, qui possède une face 56 formant une couronne circulaire autour d'une ouverture axiale normalement fermée par un couvercle amovible 47 perpendiculaire à l'axe 20. A partir du bord radial interne 58 de la face 54, la paroi du capot creux 46 se poursuit par un retour axial vers l'intérieur de la machine qui forme un élément de flasque 60 généralement tronconique. La paroi de cet élément de flasque 60 définit à son autre extrémité axiale une portée cylindrique 62 dans laquelle vient se loger le palier de roulement 18 de l'arbre de rotor 31 en butée contre un épaulement annulaire 61 (fig. 4). Un alésage 163 permet le passage de l'arbre de rotor 31 de l'autre côté de l'élément de flasque 60. Dans la position d'assemblage représentée dans cet exemple sur la figure 1, les faces axiales internes 64, de la pièce 60, et 65, du palier 18 qu'elle supporte, se trouvent sensiblement dans le même plan normal à l'axe 20 que les parties terminales des blocs de résine 30 enveloppant les chignons 152. Un espace annulaire 153 entre l'extrémité axiale interne de l'élément de flasque 60 et les blocs de résine 30 permet le libre passage des fils souples de raccordement des bobines du circuit magnétique 22 depuis la sortie des encoches jusqu'à une ouverture de sortie 70 ménagée dans le capot 46 comme il va être expliqué ci-après.

La paroi 66 de l'élément de flasque 60 qui relie sa face terminale 56 à la portée 62 présente une face radiale externe tronconique 67 qui limite, avec la face radiale interne de la paroi cylindrique 54 du capot, un logement de révolution évasé axialement vers l'intérieur de la machine. A la périphérie de cet espace la paroi 54 est percée par deux ouvertures dont l'une, 70, est bien visible sur la figure 1 et l'autre, 79, sur la figure 4. Du côté externe de la paroi 54 est fixé un embout 72 percé d'un canal prolongeant l'ouverture 70. L'embout 72 est surmonté par un connecteur électrique 76 maintenu par des vis 78 sur la face de sortie du canal hors de l'embout 72.

Ainsi, au montage, avant l'assemblage du capot 46 sur le manchon 33, les conducteurs souples de connexion des enroulements de l'inducteur sortant des encoches 26 concernées, sont rassemblés en un faisceau hors du corps du stator, puis engagés dans l'ouverture 70 du capot 46 et raccordés à leurs cosses de connexion respectives dans le connecteur 76. Il est ensuite loisible d'enrouler dans l'espace évasé entre les parois 54 et 67, la longueur du faisceau de fils de raccordement en excès, qui se forme lors du rapprochement du capot 46 et de la carcasse statorique, pour appliquer et visser la collerette 50 à l'extrémité 40 du manchon 33.

Revenant maintenant à l'élément de flasque 60, la paroi radiale interne de celui-ci définit un logement tronconique évasé vers l'extrémité axiale externe du capot 46, qui débouche dans l'ouverture 59. Dans ce logement est monté un résolveur 160 comportant un rotor 162 fixé au bout 161 de l'arbre 31 du rotor, du côté du palier de roulement 18 opposé au rotor proprement dit, et un stator 164. Le stator de résolveur 164 est bloqué entre un épaulement 165 autour de l'alésage 163 dans la pièce 60 et un épaulement 167 dans la face axiale interne du couvercle 47 dont la partie centrale présente un évidement en 59 comme représentée. Le couvercle 47 est maintenu par des vis à l'extrémité du capot 46. Le rotor du résolveur 160 est calé sur l'arbre 31 du rotor 16 dans une position angulaire prédéterminée qui sert de référence pour transmettre, à chaque instant, une information sur la position angulaire du rotor dans le stator au système de pilotage de la machine électrique, conformément au principe de fonctionnement connu des machines synchrones triphasées.

On remarque que la disposition décrite ici permet d'effectuer certaines interventions telles que des opérations de maintenance, par exemple en démontant l'arbre 31 à partir de la partie droite de la figure 1 où la machine est fermée par un flasque 170 vissé sur l'autre face terminale du fourreau de carcasse 33, 34, qui supporte le deuxième palier de roulement 19 pour l'autre extrémité de l'arbre 31. Le démontage du flasque permet de libérer la partie droite de l'arbre 31. Le rotor peut être alors extrait du stator en emmenant avec lui, sur son autre extrémité de l'arbre 31, non seulement le palier de roulement 18 qui s'extrait de la portée 62 correspondante de l'élément de flasque 60, mais également le rotor 162 du résolveur à travers l'alésage 163 dont le diamètre est supérieur à celui du rotor de résolveur. L'opération peut se faire sans détruire le calage angulaire existant entre les deux rotors. Ceci permet de gagner un temps de réglage précieux au remontage.

Sur la figure 1 on peut remarquer que le sommet du stator de résolveur 164 est surmonté d'un espace annulaire 169 dans pièce de liaison 60 entre les deux épaulements 165 et 167 qui le maintiennent en position. Dans cet espace viennent se loger des conducteurs des bobines du stator de résolveur, non visibles sur la figure 1, dont les fils de raccordement qui portent les informations utiles au pilotage dont il vient d'être question sortent dans l'espace 169. Une ouverture (non visible) pratiquée dans la paroi 66 de l'élément de flasque 60 à un azimut voisin de celui de l'ouverture 79 (figure 4) permet de faire sortir les extrémités de ces conducteurs par cette ouverture 79 dans un embout sensiblement radial externe, analogue à l'embout 72, surmonté par un connecteur de signaux électroniques 180 voisin du connecteur 76 (voir figures 2 et 4).

Le connecteur 180 reçoit également la ligne de sortie d'un capteur de température, dit sonde PTC, 125 destiné à fournir un information sur la température interne du stator, afin de réguler certains paramètres du fonctionnement de la machine en vue de maintenir l'échauffement correspondant dans des limites techniquement acceptables.

L'invention n'est pas limitée à l'exemple décrit et représenté ci-dessus; diverses modifications peuvent y être apportées sans sortir de son cadre défini par les revendications annexées.

## Revendications

1. Machine électrique comportant un stator (14), un rotor (16) sur un arbre tournant autour d'un axe (20) à l'intérieur du stator et une carcasse (33, 34) enfermant l'ensemble, et dans laquelle
le stator (14) comprend un circuit magnétique (22) avec deux faces terminales, traversé, d'une part, par un canal cylindrique (42) recevant le rotor (12) et, d'autre part, par des encoches (26) dans lesquelles sont logés des conducteurs d'enroulements (145) dont les extrémités sont repliées dans des chignons (152) au sortir de chacune desdites faces terminales (27 et 28), de façon à former des bobines raccordées électriquement à l'extérieur de la machine par des conducteurs de connexion à la sortie de l'une au moins de ces faces terminales, et
la carcasse inclut un fourreau (33, 34) enveloppant latéralement circuit magnétique entre ses faces terminales (27 et 28), et une pièce tubulaire (46) qui présente une paroi latérale (54) fixée à une extrémité audit fourreau, du côté desdites sorties de conducteurs de connexion, pour le prolonger au-delà de la face terminale (27) correspondante du stator, cette paroi latérale étant percée d'une ouverture (70) pour raccordement électrique desdits conducteurs de connexion hors de la carcasse,
cette machine étant **caractérisée en ce qu'**un élément de flasque (60) est rattaché à ladite pièce tubulaire (46) à proximité de son extrémité axiale opposée au fourreau, **en ce que** cet élément de flasque (60) s'étend à l'intérieur de la pièce tubulaire depuis son point de rattachement à la paroi latérale de la pièce tubulaire en direction de la face terminale (27) du circuit magnétique (22) jusqu'en une position axiale proche de l'extrémité axiale du chignon correspondant, position dans laquelle il supporte un palier de rotation (62, 18) de l'arbre (31) du rotor, et **en ce qu'**entre la face radiale externe (67) de l'élément de flasque (60) et la face radiale interne de la pièce tubulaire (46), l'élément de flasque (60) délimite un espace annulaire (68) dans lequel est logé un excès de longueur des conducteurs de connexion entre le chignon et l'extérieur de la machine.

2. Machine électrique selon la revendication 1, **caractérisée en ce que**, dans ladite position axiale, l'extrémité radiale externe (64) dudit flasque (60) pénètre jusqu'à l'entrée de l'espace interne au chignon en laissant un passage de communication annulaire (153) entre l'espace radial interne au chignon et ledit espace annulaire (68) autour de l'élément de flasque.

3. Machine électrique selon la revendication 2, **caractérisée en ce que** ledit espace annulaire (68) s'élargit radialement vers l'intérieur depuis le point de rattachement (56) à la pièce tubulaire jusqu'à l'extrémité radiale externe (64) de l'élément de flasque qui porte le palier (18) de l'arbre du rotor.

4. Machine électrique selon la revendication 3, **caractérisée en ce que** la paroi radiale interne de l'élément de flasque s'élargit radialement extérieurement en direction axiale depuis la portée (62) du palier d'arbre rotor jusqu'audit point de rattachement (56) à la pièce tubulaire (46).

5. Machine électrique selon l'une des revendications 1 à 4 **caractérisée en ce que** la pièce tubulaire (46) constitue une pièce monobloc avec ledit élément de flasque interne, qui assure à la fois le support du palier (18) de l'arbre rotor (31) et l'aménagement de l'espace interne de cette pièce.

6. Machine électrique selon la revendication 3, **caractérisée en ce que** la paroi radiale interne de l'élément de flasque (60) définit un logement propre à recevoir le stator d'un resolver (164) entre la portée (62) de palier de l'arbre du rotor machine et une ouverture (59) propre à fournir un accès à ce stator (164) depuis son extrémité axiale externe.

7. Machine électrique selon la revendication 6, **caractérisée en ce que** la paroi radiale interne de l'élément de flasque (60) comporte un ouverture de communication avec l'espace annulaire (68) pour le passage de conducteurs statoriques depuis ledit logement vers l'extérieur de la machine.

8. Machine électrique selon la revendication 6 ou 7, **caractérisée en ce que** la pièce tubulaire (46) constitue une pièce monobloc dans laquelle la paroi radiale interne de l'élément de flasque (60) délimite un espace qui s'élargit radialement extérieurement depuis le palier (18) jusqu'au raccordement dudit élément de flasque (60) à la pièce tubulaire (46) vers son extrémité axiale externe (56).

9. Machine électrique selon l'une des revendications 1 à 4 , **caractérisée en ce qu'**elle comporte un resolver (160) à l'intérieur dudit élément de flasque (60), dont le rotor (162) est fixé sur l'arbre (31) du rotor (16) de la machine, du côté axial externe par rapport à la portée de palier (18) du rotor, et dont le stator (164) est monté dans un logement dudit élément de flasque comportant une ouverture d'accès depuis l'extrémité axiale externe du ladite pièce tubulaire (46).

10. Machine électrique selon la revendication 9, **caractérisée en ce que** ledit élément de flasque (60) présente autour de la dite portée (62) du palier (18) de l'arbre rotor (31) une butée (61) en forme de couronne circulaire tournée du côté axial interne propre à caler axialement ledit palier (18) et un alésage (163), au centre de cette couronne, dont le diamètre est supérieur à celui du rotor de resolver (162) en sorte que le rotor (16) de la machine puisse être démonté par un déplacement axial à l'intérieur du stator moteur par rapport audit palier, en emmenant avec lui le rotor (162) du résolveur à travers ledit alésage sans en dérégler le calage angulaire par rapport au rotor de la machine.

11. Machine électrique selon l'une des revendications précédentes, **caractérisée en ce que** la pièce tubulaire (46), qui prolonge le fourreau autour des conducteurs de connexion, a la forme générale d'un capot (46) qui comporte une face terminale (56) du côté axial externe munie d'une ouverture centrale dans laquelle débouche l'espace radial interne dudit élément de flasque (60).

12. Machine électrique selon l'une des revendications 1 à 5, **caractérisée en ce que** la pièce tubulaire (46), qui prolonge le fourreau autour des conducteurs de connexion en permettant leur sortie hors du fourreau, a la forme générale d'un capot (46) qui comporte une face terminale définie par une paroi (56) en forme de couronne annulaire dont le bord circulaire externe est rattaché à la paroi latérale du capot et le bord circulaire interne (58) est solidaire de l'extrémité axiale externe dudit élément de flasque (60).

13. Machine électrique selon l'une des revendications 6 à 12, **caractérisée en ce que** ledit logement est normalement fermé par un couvercle (47) à l'extrémité axiale de ladite pièce tubulaire.

14. Machine électrique selon l'une des revendications précédentes, **caractérisée en ce que** la paroi latérale (54) de la pièce tubulaire (46) est surmontée d'au moins un embout (38) faisant saillie vers l'extérieur et percé d'un canal qui prolonge l'ouverture (70) de passage à travers ladite paroi des conducteurs de connexion issus dudit espace.

15. Machine électrique selon l'une des revendications 6 à 10, **caractérisée en ce que** la paroi latérale comporte une deuxième ouverture (79) surmontée d'un autre embout (180) faisant saillie vers l'extérieur et percé d'un canal pour la sortie de conducteurs de raccordement du stator (164) de résolveur hors de la carcasse.

## Claims

1. Electric machine comprising a stator (14), a rotor (16) on a shaft rotating about an axis (20) inside the stator and a frame (33, 34) enclosing the assembly, and in which
the stator (14) comprises a magnetic circuit (22) with two end faces, passed through, on the one hand, by a cylindrical channel (42) receiving the rotor (12) and, on the other hand, by notches (26) housing winding conductors (145), the ends of which fold into winding heads (152) at the output of each of said end faces (27 and 28), so as to form coils electrically connected to the outside of the machine by connection conductors at the output of at least one of these end faces, and
the frame includes a sleeve (33, 34) laterally enveloping the magnetic circuit between its end faces (27 and 28), and a tubular part (46) which has a lateral wall (54) fixed at one end to said sleeve, on the side of said connection conductor outputs, so as to extend it beyond the corresponding end face (27) of the stator, this lateral wall being pierced with an opening (70) for electrically connecting said connection conductors outside the frame
this machine being **characterized in that** a flange element (60) is attached to said tubular part (46) close to its axial end opposite to the sleeve, **in that** this flange element (60) extends inside the tubular part from its point of attachment towards the end face (27) of the magnetic circuit (22) as far as an axial position close to the axial end of the corresponding winding head, a position in which it supports a rotation bearing (62, 18) for the shaft (31) of the rotor, and **in that**, between the external radial face (67) of the flange element (60) and the internal radial face of the tubular part (46), the flange element (60) delimits an annular space (68) housing an excess length of the connection conductors between the winding head and the outside of the machine.

2. Electric machine according to Claim 1, **characterized in that**, in said axial position, the external radial end (64) of said flange (60) penetrates as far as the input of the space internal to the winding head while leaving an annular communication passage (153) between the radial space internal to the winding head and said annular space (68) around the flange element.

3. Electric machine according to Claim 2, **characterized in that** said annular space (68) widens radially towards the inside from the point (56) of attachment to the tubular part as far as the external radial end (64) of the flange element supporting the bearing (18) of the rotor shaft.

4. Electric machine according to Claim 3, **characterized in that** the internal radial wall of the flange element widens radially externally in the axial direction from the seating (62) of the bearing of the rotor shaft as far as said point (56) of attachment to the tubular part (46).

5. Electric machine according to one of Claims 1 to 4, **characterized in that** the tubular part (46) constitutes a single-piece part with said internal flange element, which provides both support for the bearing (18) for the rotor shaft (31) and provision for the internal space of this part.

6. Electric machine according to Claim 3, **characterized in that** the internal radial wall of the flange element (60) defines a housing designed to receive the stator (164) of a resolver between the seating (62) of the bearing for the machine rotor shaft and an opening (59) designed to provide access to this stator (164) from its external radial end.

7. Electric machine according to Claim 6, **characterized in that** the internal radial wall of the flange element (60) includes an opening for communication with the annular space (68) for the passage of stator conductors from said housing towards the outside of the machine.

8. Electric machine according to Claim 6 or 7, **characterized in that** the tubular part (46) constitutes a single-piece part in which the internal radial wall of the flange element (60) delimits a space that widens radially externally from the bearing (18) as far as the connection of said flange element (60) to the tubular part (46) towards its external axial end (56).

9. Electric machine according to one of Claims 1 to 4, **characterized in that** it comprises a resolver (160) inside said flange element (60), the rotor (162) of which is fixed to the shaft (31) of the rotor (16) of the machine, on the external axial side relative to the seating of the bearing (18) of the rotor, and the stator (164) of which is mounted in a housing of said flange element including an opening for accessing said tubular part (46) from the external axial end.

10. Electric machine according to Claim 9, **characterized in that** said flange element (60) has, around said seating (62) of the bearing (18) of the shaft (31) of the rotor, an abutment (61) in the form of a circular crown facing the internal axial side designed to axially immobilise said bearing (18) and a bore (163), at the centre of this crown, the diameter of which is greater than that of the resolver rotor (162) so that the rotor (16) of the machine can be removed by an axial displacement inside the motor stator relative to said bearing, bringing with it the rotor (162) of the resolver through said bore without disturbing its angular immobilisation relative to the rotor of the machine.

11. Electric machine according to one of the preceding claims, **characterized in that** the tubular part (46), which extends the sleeve around the connection conductors, has the general form of a lid (46) which has an end face (56) on the external axial side provided with a central opening into which the internal radial space of said flange element (60) opens.

12. Electric machine according to one of Claims 1 to 5, **characterized in that** the tubular part (46), which extends the sleeve around the connection conductors while allowing them to exit from the sleeve, has the general form of a lid (46) which has an end face defined by a wall (56) in the form of an annular crown, of which the external circular edge is attached to the lateral wall of the lid and the internal circular edge (58) is securely attached to the external axial end of said flange element (60).

13. Electric machine according to one of Claims 6 to 12, **characterized in that** said housing is normally closed by a cover (47) at the axial end of said tubular part.

14. Electric machine according to one of the preceding claims, **characterized in that** the lateral wall (54) of the tubular part (46) is topped by at least one nozzle (38) projecting outwards and pierced with a channel which extends the opening (70) allowing for the passage of the connection conductors from said space through said wall.

15. Electric machine according to one of Claims 6 to 10, **characterized in that** the lateral wall has a second opening (79) topped by another nozzle (180) projecting outwards and pierced with a channel for the conductors connecting the resolver stator (164) to exit from the frame.

## Patentansprüche

1. Elektrische Maschine, die einen Stator (14), einen Rotor (16) auf einer um eine Achse (20) innerhalb des Stators drehenden Welle und ein Gehäuse (33, 34) aufweist, das die Einheit umschließt, und bei der
der Stator (14) einen Magnetkreis (22) mit zwei Endseiten enthält, der einerseits von einem den Rotor (12) aufnehmenden zylindrischen Kanal (42) und andererseits von Nuten (26) durchquert wird, in denen Wicklungsleiter (145) untergebracht sind, deren Enden in Wickelköpfen (152) am Ausgang jeder der zwei Endseiten (27 und 28) zusammengelegt sind, um Spulen zu formen, die elektrisch außerhalb der Maschine durch Verbindungsleiter an den Ausgang mindestens einer dieser Endseiten angeschlossen sind, und
das Gehäuse ein Mantelrohr (33, 34), das den Magnetkreis seitlich zwischen seinen Endseiten (27 und 28) umhüllt, und ein rohrförmiges Bauteil (46) enthält, das eine Seitenwand (54) aufweist, die an einem Ende am Mantelrohr auf der Seite der Ausgänge von Verbindungsleitern befestigt ist, um es über die entsprechende Endseite (27) des Stators hinaus zu verlängern, wobei diese Seitenwand von einer Öffnung (70) zum elektrischen Anschluss der Verbindungsleiter außerhalb des Gehäuses durchbohrt ist,
wobei diese Maschine **dadurch gekennzeichnet ist, dass** ein Flanschelement (60) am rohrförmigen Bauteil (46) in der Nähe seines axialen Endes entgegengesetzt zum Mantelrohr befestigt ist, dass dieses Flanschelement (60) sich innerhalb des rohrförmigen Bauteils von seinem Befestigungspunkt an der Seitenwand des rohrförmigen Bauteils in Richtung der Endseite (27) des Magnetkreises (22) bis zu einer axialen Stellung nahe dem axialen Ende des entsprechenden Wickelkopfs erstreckt, Stellung, in der es ein Drehlager (62, 18) der Welle (31) des Rotors trägt, und dass zwischen der radial äußeren Seite (67) des Flanschelements (60) und der radial inneren Seite des rohrförmigen Bauteils (46) das Flanschelement (60) einen ringförmigen Raum (68) begrenzt, in dem ein Längenüberschuss der Verbindungsleiter zwischen dem Wickelkopf und der Außenseite der Maschine untergebracht ist.

2. Elektrische Maschine nach Anspruch 1, **dadurch gekennzeichnet, dass** in der axialen Stellung das radial äußere Ende (64) des Flanschs (60) bis zum Eingang des Innenraums des Wickelkopfs eindringt, indem es einen ringförmigen Verbindungsdurchgang (153) zwischen dem inneren radialen Raum des Wickelkopfs und dem ringförmigen Raum (68) um das Flanschelement frei lässt.

3. Elektrische Maschine nach Anspruch 2, **dadurch gekennzeichnet, dass** der ringförmige Raum (68) sich ausgehend vom Befestigungspunkt (56) am rohrförmigen Bauteil bis zum radial äußeren Ende (64) des Flanschelements, das das Lager (18) der Welle des Rotors trägt, radial nach innen verbreitert.

4. Elektrische Maschine nach Anspruch 3, **dadurch gekennzeichnet, dass** die innere radiale Wand des Flanschelements sich radial außen in axialer Richtung von der Auflagefläche (62) des Rotorwellenlagers bis zum Befestigungspunkt (56) am rohrförmigen Bauteil (46) verbreitert.

5. Elektrische Maschine nach einem der Ansprüche 1 bis 4, **dadurch gekennzeichnet, dass** das rohrförmige Bauteil (46) ein einstückiges Bauteil mit dem inneren Flanschelement bildet, das sowohl das Stützen des Lagers (18) der Rotorwelle (31) als auch die Gestaltung des Innenraums dieses Bauteils gewährleistet.

6. Elektrische Maschine nach Anspruch 3, **dadurch gekennzeichnet, dass** die innere radiale Wand des Flanschelements (60) eine Aufnahme definiert, die den Stator eines Resolvers (164) zwischen der Lagerauflagefläche (62) der Welle des Maschinenrotors und einer Öffnung (59) aufnehmen kann, die einen Zugang zu diesem Stator (164) von seinem äußeren axialen Ende liefern kann.

7. Elektrische Maschine nach Anspruch 6, **dadurch gekennzeichnet, dass** die innere radiale Wand des Flanschelements (60) eine Verbindungsöffnung mit dem ringförmigen Raum (68) für den Durchgang von Statorleitern von der Aufnahme nach außerhalb der Maschine aufweist.

8. Elektrische Maschine nach Anspruch 6 oder 7, **dadurch gekennzeichnet, dass** das rohrförmige Bauteil (46) ein einstückiges Bauteil bildet, in dem die innere radiale Wand des Flanschelements (60) einen Raum begrenzt, der sich vom Lager (18) bis zum Anschluss des Flanschelements (60) an das rohrförmige Bauteil (46) zu seinem äußeren axialen Ende (56) radial außen verbreitert.

9. Elektrische Maschine nach einem der Ansprüche 1 bis 4, **dadurch gekennzeichnet, dass** sie einen Revolver (160) innerhalb des Flanschelements (60) aufweist, dessen Rotor (162) an der Welle (31) des Rotors (16) der Maschine auf der äußeren axialen Seite bezüglich der Lagerauflagefläche (18) des Rotors befestigt ist, und dessen Stator (164) in eine Aufnahme des Flanschelements montiert ist, die eine Zugangsöffnung vom äußeren axialen Ende des rohrförmigen Bauteils (46) aufweist.

10. Elektrische Maschine nach Anspruch 9, **dadurch gekennzeichnet, dass** das Flanschelement (60) um die Auflagefläche (62) des Lagers (18) der Rotorwelle (31) herum einen Anschlag (61) in Form eines zur inneren axialen Seite weisenden Kreisrings, der das Lager (18) axial einspannen kann, und eine Bohrung (163) in der Mitte dieses Rings aufweist, deren Durchmesser größer als derjenige des Resolver-Rotors (162) ist, damit der Rotor (16) der Maschine durch eine axiale Verschiebung innerhalb des Motorstators bezüglich des Lagers ausgebaut werden kann, indem er den Rotor (162) des Resolvers durch die Bohrung mitnimmt, ohne dessen Winkeleinstellung bezüglich des Rotors der Maschine zu verstellen.

11. Elektrische Maschine nach einem der vorhergehenden Ansprüche, **dadurch gekennzeichnet, dass** das rohrförmige Bauteil (46), das das Mantelrohr um die Verbindungsleiter verlängert, die allgemeine Form einer Kappe (46) hat, die eine Endseite (56) auf der äußeren axialen Seite aufweist, die mit einer zentralen Öffnung versehen ist, in die der innere radiale Raum des Flanschelements (60) mündet.

12. Elektrische Maschine nach einem der Ansprüche 1 bis 5, **dadurch gekennzeichnet, dass** das rohrförmige Bauteil (46), das das Mantelrohr um die Verbindungsleiter verlängert, indem es ihren Austritt aus dem Mantelrohr ermöglicht, die allgemeine Form einer Kappe (46) hat, die eine Endseite aufweiset, die von einer Wand (56) in Form eines Kreisrings definiert wird, dessen äußerer kreisförmiger Rand an der Seitenwand der Kappe befestigt und dessen innerer kreisförmiger Rand (58) fest mit dem äußeren axialen Ende des Flanschelements (60) verbunden ist.

13. Elektrische Maschine nach einem der Ansprüche 6 bis 12, **dadurch gekennzeichnet, dass** die Aufnahme normalerweise von einem Deckel (47) am axialen Ende des rohrförmigen Bauteils verschlossen wird.

14. Elektrische Maschine nach einem der vorhergehenden Ansprüche, **dadurch gekennzeichnet, dass** über der Seitenwand (54) des rohrförmigen Bauteils (46) mindestens ein Aufsatz (38) angeordnet ist, der nach außen vorsteht und in den ein Kanal gebohrt ist, der die Durchgangsöffnung (70) durch die Wand der Verbindungsleiter verlängert, die aus dem Raum stammen.

15. Elektrische Maschine nach einem der Ansprüche 6 bis 10, **dadurch gekennzeichnet, dass** die Seitenwand eine zweite Öffnung (79) aufweist, über der ein weiterer Aufsatz (180) angeordnet ist, der nach außen vorsteht und in den ein Kanal für den Austritt von Anschlussleitern des Resolver-Stators (164) aus dem Gehäuse gebohrt ist.
